# EUROPÄISCHE PATENTSCHRIFT

(11) **EP 0 795 745 B1**
(45) Veröffentlichungstag und Bekanntmachung des Hinweises auf die Patenterteilung: **25.06.2003**
(21) Anmeldenummer: 97111105.9
(22) Anmeldetag: 08.07.1992
(51) Int. Cl.: G01N 21/76

(54) **Strahlungsmessgerät insbesondere zur Lumineszenzmessung**
Radiation measuring apparatus, in particular for measuring the luminescence
Appareil de mesure de radiation, en particulier pour la mesure de la luminescence

(30) Priorität: 18.07.1991 DE 4123818
(43) Veröffentlichungstag der Anmeldung: 17.09.1997
(62) Teilanmeldung aus: 92111537.4
(73) Patentinhaber: Berthold Technologies GmbH & Co. KG, 75323 Bad Wildbad (DE)
(72) Erfinder: Berthold, Fritz, Dr., 7530 Pforzheim (DE); Lohr, Willy, 7547 Wildbad (DE)
(74) Vertreter: Frank, Gerhard, Dipl.-Phys.

(56) Entgegenhaltungen:
- EP-A- 0 136 002
- EP-A- 0 314 448
- EP-A- 0 424 634
- US-A- 3 997 404

## Beschreibung

Die Erfindung betrifft ein Strahlungsmeßgerät, insbesondere zur Lumineszenzmessung.

Ein derartiges Strahlungsmeßgerät ist aus der US-PS 4,772,453 bekannt. Das aufgrund der Lumineszenzreaktion nach oben aus einem Probengefäß austretende Licht wird bei dieser vorbekannten Anordnung über eine Sammel- und Umlenkoptik dem in einem lichtdichten Gehäuse angeordneten Photomultiplier zugeleitet. Die Injektionsvorrichtung zum Eindringen der die Lumineszenzreaktion aktivierenden Substanz befindet sich hierbei über dem benachbarten, als nächstes auszumessenden Probengefäß, so daß zwischen der Zugabe der Injektionsflüssigkeit und dem Beginn der Lumineszenzmessung zwangsläufig eine Totzeit liegt, die durch den Transport der Probengefäße um eine Position weiter verursacht ist.

Diese Totzeit ist ohne Bedeutung, wenn die "Lumineszenzantwort" des in den Probengefäßen befindlichen Analyten relativ langsam und lang andauernd ist, so daß eine definierbare Zeitspanne dieses "Lumineszenzglühens" (US-PS 4,772,453 Spalte 2, Zeile 59) zuverlässig zur Analyse ausgewählt werden kann.

Es gibt jedoch Typen von Lumineszenzreaktionen, bei denen in der Größenordnung von einer Sekunde oder Bruchteilen nach der Zugabe der die Lumineszenzreaktion aktivierenden Substanz bereits eine blitzartige Lumineszenzantwort erfolgt, d.h. diese Lumineszenzantwort würde mit Sicherheit zum größten Teil in der Totzeit der Meßvorrichtung gemäß der US-PS 4,772,453 liegen, nämlich während der Transportzeit des benachbarten Probengefäßes in den Meßbereich des Photomultipliers bzw. der vorgeschalteten Optik.

Diese vorbekannte Vorrichtung ist daher ungeeignet für die Auswertung "schneller Lumineszenzreaktionen", da Injektion und Messung infolge der räumlichen Trennung von Injektorspitze und Meßoptik nicht gleichzeitig erfolgen können.

In der EP-A-0 136 002 wird zur Absorptionsmessung vorgeschlagen, die Spitze einer seitlich von einem Lichtdetektor angeordneten Injektionsvorrichtung in einen Bereich unterhalb des Lichtdetektors abzubiegen, wenn eine Verschiebung des aktuell auszumessenden Probengefäßes zwischen Injektion und Messung vermieden werden soll. Dies hat jedoch den Nachteil, daß ein relativ großer Teil des Lichtwegs versperrt wird, was zu einer Erniedrigung der Empfindlichkeit führt.

Eine weitere Möglichkeit der erwünschten gleichzeitigen Injektion und Messung besteht darin (US-PS 4,396,579), die die Lumineszenzreaktion aktivierende Substanz von oben in ein spezielles Probengefäß zuzugeben und durch den durchscheinenden Boden des Probengefäßes die Lumineszenzantwort mit dem Photomultiplier zu registrieren bzw. analysieren. Hierzu sind jedoch spezielle Probengefäße bzw. Probengefäßanordnungen erforderlich, die einer Automatisierung solcher Verfahren im Wege stehen, insbesondere können hier nicht inzwischen standardisierte Mikrotestplatten ("Mikrotiter"-Platten) eingesetzt werden.

Letzteres gilt auch für die Meßvorrichtung nach der DE-OS 36 23 601, wo die Injektion von oben, die Messung der Lumineszenzantwort seitlich durch die Wandung des Probengefäßes erfolgt; auch hier sind spezielle Probengefäße oder Probengefäßhalterungen erforderlich. Eine ähnliche Anordnung zeigt auch die DE-OS 29 01 919.

Die EP-0 181 060 A2 zeigt eine Möglichkeit, eine Mehrzahl von matrixartig angeordneten Probengefäßen auszumessen und ist somit grundsätzlich auch für den Einsatz der genannten Mikrotestplatten geeignet; allerdings wird dort nichts gesagt über die Zugabe der die Lumineszenzreaktion aktivierenden Substanz, was folglich nur vor dem Aufsetzen des Strahlungsdetektors bzw. des Lichtleiterkabels erfolgen kann und demnach die oben erläuterten Nachteile der gattungsbildenden US-PS 4,772,453 impliziert.

Die EP-A-0 424 634 zeigt ein Strahlungsmessgerät zur Chemilumineszenzmessung an einem Chemilumineszenzassay, das in einer speziellen Messkammer untergebracht ist, deren Abschnitte sich nach oben kegelförmig öffnen und in die zwei Injektoren geführt sind. Zwischen diesem oberen Teil der Probenbehälter und dem Eintrittsquerschnitt des Photomultipliers bzw. des zu diesem führenden Lichtleiters ist ein Zwischenraum vorgesehen, der ausreicht, um die beiden Injektoren einzufügen; die kegelstumpfförmige Ausgestaltung der oberen Abschnitte des Probenbehälters hat folglich keine optische Funktion im Sinne einer Blende.

Die EP-A-0 314 448 zeigt eine Injektionsvorrichtung zur Lumineszenzmessung ebenfalls ohne eine Blende, die US-A-3 997 404 zeigt zwar eine kegelstumpfförmige Blende, jedoch keine Injektionsvorrichtung.

Ausgehend von einem Strahlungsmessgerät zB gemäßt US-A-4 772 453 besteht die Aufgabe der Erfindung daher darin, diese Vorrichtung so weiterzubilden, dass Messung und Injektion gleichzeitig erfolgen können, wobei insbesondere die Möglichkeit der Messung von Mikrotestplatten erhalten bleiben soll.

Die erfindungsgemäße Lösung dieser Aufgabe zeigt der Gegenstand des Patentanspruchs 1.

Hierbei sitzt der Strahlungsdetektor selbst auf der Kegelblende auf, durch die die Injektionsvorrichtung geführt ist, so dass Lichtleitungselemente entfallen und der Strahlungsdetektor selbst einerseits und die Injektionsvorrichtung andererseits räumlich getrennt sind.

Hierbei ist insbesondere der Innenquerschnitt der Kegelblende kegelstumpfartig ausgebildet, so dass eine Anpassung des Eintrittsquerschnitts der Kegelblende an den Eintrittsquerschnitt des direkt oberhalb aufsitzenden Strahlungsdetektors ermöglicht wird. Diese Kegelblende erfüllt somit mehrere Aufgaben:

Sie schafft einerseits einen ausreichenden Abstand zwischen der Eintrittsöffnung des Photomultipliers und der Austrittsöffnung des Probengefäßes in seiner Messposition, so dass in diesen Zwischenraum ein Injektionsschlauch eingeführt werden kann.

Darüber hinaus ermöglicht die Kegelblende die unmittelbare Ankoppelung von handelsüblichen Photomultipliern in einem solchen Abstand von der Austrittsöffnung des Probengefäßes, daß der effektiv erfaßbare Raumwinkel gegenüber einer Messung mit geringerem Abstand und somit die Meßempfindlichkeit unbeeinträchtigt bleibt.

Schließlich dient eine solche Kegelblende auch als optisches Dichtelement, das sowohl Außenlicht als auch Streulicht von benachbarten Probengefäßen (Crosstalk) zuverlässig vermeidet.

Wird die Kegelblende darüber hinaus aus einem elastischen Werkstoff gebildet, so kann sie praktisch zwischen Photomultiplier und Probengefäßöffnung eingeklemmt werden, was eine nochmalige Verbesserung der optischen Abdichtung erbringt, wenn beispielsweise bei individuellen Probengefäßen oder bei unpräzise arbeitenden Verschiebeeinrichtungen der Abstand zwischen Eintrittsöffnung des Photomultipliers und Austrittsöffnung des individuellen Probengefäßes innerhalb bestimmter Toleranzgrenzen schwankt.

Die erfindungsgemäße Kegelblende wirkt somit optisch und mechanisch als Interface zwischen Probengefäß einerseits und Photomultiplier andererseits und gestattet die zuverlässige Messung mit hoher Meßempfindlichkeit.

Entscheidend ist, daß das Ende der Injektionsvorrichtung im Eintrittsquerschnitt des Photomultipliers liegt und somit die Lösung der Aufgabe durch wenige zusätzliche Bauelemente erreicht wird, die die oben beschriebenen spezifischen Vorteile aufweisen.

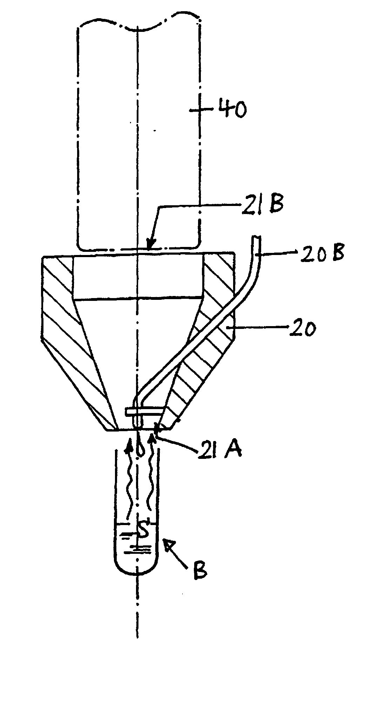

Ein bevorzugtes Ausführungsbeispiel der Erfindung wird nun anhand der Zeichnung erläutert, die eine schematische Schnittdarstellung der funktionsgemäß angeordneten Kegelblende darstellt.

Unterhalb eines Detektors 40 (z.B. Photomultiplier) ist eine Kegelblende 20 vorgesehen, durch deren Eintrittsquerschnitt 21A sowohl die Strahlung S bis zur Eintrittsblende 21B des Detektors 40 gelangt, als auch durch dessen Seitenwandung eine Injektionsvorrichtung 20B von außen in den Bereich des Eintrittsquerschnitts 21A geführt ist. Da die betroffenen Eintrittsquerschnitte im wesentlichen vorgegeben sind (21A durch den Öffnungsquerschnitt der auszumessenden Probengefäße B, 21B durch den Eintrittsquerschnitt von handelsüblichen Photomultipliern), dient die Kegelblende 20 auch zur optischen Adaption dieser beiden Eintrittsblenden 21A/21B, indem sich ihr Innenquerschnitt nach oben kegelstumpfförmig aufweitet, so daß der Eintrittsquerschnitt 21B des Photomultipliers auch zur vollständigen Erfassung der durch den Eintrittsquerschnitt 21A tretenden Strahlung S ausgenutzt wird, da der vom Detektor "gesehene" Raumwinkel voll erhalten bleibt. Zur Vermeidung von optischen Verlusten ist die Innenfläche der Kegelblende 20 verspiegelt ausgeführt.

Beim dargestellten Ausführungsbeispiel ist der Strahlungsdetektor 40 unmittelbar über die Kegelblende 20 angeordnet, selbstverständlich ist jedoch auch eine Bemessung der Kegelblende in der Art möglich, daß anstelle eines unmittelbar nachgeschalteten Photomultipliers geeignete Lichtleitungselemente anschließbar sind.

## Patentansprüche

1. Strahlungsmessgerät, insbesondere zur Lumineszenzmessung, mit einem Probengefäß (B) und einem Strahlungsdetektor, insbesondere einem Photomultiplier, der die aus der Öffnung der Probengefäße austretende Strahlung erfasst, sowie mit einer Injektionsvorrichtung (20B), die zur Zugabe einer chemischen Substanz in die Öffnung des Probengefäßes, insbesondere zur Initiierung der Lumineszenzreaktion, durch die Wandung einer sich nach oben kegelstumpfförmig öffnenden, zwischen Probengefäß (B) und Strahlungsdetektor (40) und koaxial zu diesen angeordneten Kegelblende (20) geführt ist.

2. Strahlungsmessgerät nach Anspruch 1, **dadurch gekennzeichnet, dass** die Innenfläche der Kegelblende (20) lichtreflektierend, insbesondere vorspiegelt, ausgebildet ist.

## Claims

1. Radiation measuring apparatus, more especially for measuring luminescence, said apparatus having a sample container (B) and a radiation detector, more especially a photomultiplier, which detects the radiation emerging from the opening of the sample containers, as well as said apparatus having an injection device (20B) which, in order to add a chemical substance to the opening of the sample container, more especially in order to initiate the luminescence reaction, is guided through the wall of a conical cover (20), which opens upwardly in a frustoconical manner and is disposed between sample container (B) and radiation detector (40) and coaxially relative to said container and detector.

2. Radiation measuring apparatus according to claim 1, **characterised in that** the inner surface of the conical cover (20) is light-reflective, more especially metallised.

## Revendications

1. Appareil de mesure de radiation, en particulier pour la mesure de la luminescence, comportant une éprouvette (B) et un détecteur de radiation, en particulier un photomultiplicateur, qui capte la radiation sortant de l'ouverture de l'éprouvette, ainsi qu'un dispositif d'injection (20B) qui, pour l'apport d'une substance chimique dans l'ouverture de l'éprouvette, en particulier pour le lancement de la réaction de luminescence, est amené à travers la paroi d'un écran conique (20) s'évasant en tronc de cône vers le haut et disposé entre l'éprouvette (B) et le détecteur de radiation (40) et coaxialement à ceux-ci.

2. Appareil de mesure de radiation selon la revendication 1, **caractérisé en ce que** la surface intérieure de l'écran conique (20) est réflectrice de lumière, en particulier métallisée.
